# FASCICULE DE BREVET EUROPEEN

(11) **EP 3 138 168 B1**
(45) Date de publication et mention de la délivrance du brevet: **20.07.2022**
(21) Numéro de dépôt: 15721773.8
(22) Date de dépôt: 17.04.2015
(51) Int. Cl.: H02G 3/12, H02G 3/14, H02G 3/18

(54) **APPAREILLAGE ELECTRIQUE A ENGAGER DANS UNE BOITE ELECTRIQUE AVEC UNE ORIENTATION REGLABLE**
ELEKTRISCHE VORRICHTUNG ZUM EINSETZEN IN EINE ELEKTRODOSE MIT EINSTELLBARER AUSRICHTUNG
ELECTRICAL EQUIPMENT TO BE INSERTED INTO AN ELECTRICAL BOX WITH AN ADJUSTABLE ORIENTATION

(30) Priorité: 28.04.2014 FR 1453826
(43) Date de publication de la demande: 08.03.2017
(73) Titulaire: Legrand France, 87000 Limoges (FR); Legrand SNC, 87000 Limoges (FR)
(72) Inventeur: MAZIERE, Laurent, F-87220 Feytiat (FR); CAILLE, Jean-Loup, F-87510 Peyrilhac (FR); LONGEVILLE, Jérome, F-87350 Panazol (FR); CHAUMENY, Jean-Luc, 87590 Saint Just le Martel (FR)
(74) Mandataire: Jacobacci Coralis Harle
(86) Numéro de dépôt international: PCT/FR2015/051050
(87) Numéro de publication internationale: WO 2015/166163

(56) Documents cités:
- EP-A1- 0 989 648
- EP-A1- 1 860 748
- EP-A2- 2 602 888
- DE-A1- 10 020 216
- DE-U1- 9 106 123
- FR-A1- 2 641 652
- US-A- 2 934 590

## Description

### DOMAINE TECHNIQUE AUQUEL SE RAPPORTE L'INVENTION

La présente invention concerne de manière générale l'installation d'un appareillage électrique dans une paroi.

Elle concerne plus particulièrement un appareillage électrique comportant un module d'appareillage à engager dans une boîte électrique, ledit module d'appareillage comprenant :
- un socle en matériau isolant qui délimite un espace intérieur de réception d'un mécanisme électrique,
- des moyens de retenue du socle dans la boîte électrique, et
- des moyens de réglage et de blocage angulaire du socle par rapport à la boîte électrique.

Elle concerne aussi une boîte électrique adaptée à recevoir un tel appareillage électrique.

Elle concerne également un ensemble qui comprend un appareillage électrique tel que précité, et une boîte électrique adaptée à recevoir cet appareillage électrique.

L'invention trouve une application particulièrement avantageuse dans la réalisation d'un appareillage électrique présentant par exemple une fonction d'interrupteur, de va-et-vient, de variateur électrique, de prise de courant, de prise réseau (RJ45), de prise de téléphone (RJ11), de prise VDI ou équivalent (HDMI,...), de voyant, de thermostat, ou encore de détecteur (de fumée, d'inondation, de température, de mouvement ou de lumière).

### ARRIERE-PLAN TECHNOLOGIQUE

Les appareillages électriques sont majoritairement constitués de la même manière.

Ainsi, un appareillage électrique comporte généralement un support d'appareillage en forme de cadre à rapporter sur la face avant ouverte d'une boîte électrique, un mécanisme d'appareillage (par exemple d'interrupteur ou de prise de courant) à bloquer dans l'ouverture délimitée par le support d'appareillage, et une plaque d'habillage à fixer sur le support d'appareillage de telle manière qu'il cache ce dernier et qu'il borde esthétiquement le mécanisme d'appareillage.

La fixation du support d'appareillage sur la boîte électrique peut se faire de diverses manières.

Typiquement, une boîte électrique comporte généralement deux puits de vissage qui s'élèvent à partir de sa paroi de fond, le long de la face intérieure de sa paroi latérale.

Le support d'appareillage comporte en correspondance, au centre de chacune de ses quatre branches, un orifice en forme de trou de serrure propre à permettre le passage d'une vis de fixation engagée dans l'un des puits de vissage de la boîte électrique.

La forme allongée de ces orifices permet d'assurer le réglage angulaire du support par rapport à la boîte. On comprend en effet que si la boîte n'est pas installée exactement à l'horizontale dans la paroi, il est nécessaire de rattraper ce défaut en inclinant légèrement le support par rapport à la boîte, ce qui est possible grâce à la forme de ces orifices.

L'inconvénient majeur de cette solution est que, lorsque l'installateur visse le support sur la boîte, il doit prendre un soin particulier pour maintenir le support à l'horizontal, ce qui s'avère en pratique contraignant et difficile à réaliser.

Pour remédier à ce problème, on connaît du document EP1675239 une boîte comportant, en creux dans la face intérieure de sa paroi latérale, une gorge qui longe le bord avant de la boîte et qui est adaptée à accueillir un anneau sur lequel peut se visser un support d'appareillage. Cette gorge et cet anneau sont alors équipés de crans adaptés à coopérer ensemble pour régler et bloquer la position angulaire du support d'appareillage par rapport à la boîte.

L'inconvénient majeur de cette solution est que les crans coopérant directement ensemble, dès l'assemblage de l'anneau avec la boîte, il est nécessaire d'appliquer un effort important sur le support d'appareillage pour faire pivoter l'anneau par rapport à la boîte (sauf à prévoir des crans de faibles hauteurs mais qui ne bloqueront alors pas correctement la position angulaire de l'anneau dans la boîte). Un autre inconvénient est que, lors de ce réglage angulaire, les crans s'abîment, si bien qu'ils risquent à terme de ne plus pouvoir correctement assurer leur fonction de blocage angulaire.

On connaît par ailleurs du document EP2602888 un appareillage électrique comportant un élément d'engagement à rapporter dans un élément de réception. L'élément d'engagement comporte une plaque frontale, et deux pattes en 3 parties, dont une partie qui s'étend depuis la paroi frontale, vers l'arrière, une partie recourbée vers l'avant pour former un levier de manœuvre de la patte, et une partie recourbée vers l'avant et vers l'extérieur, qui porte des crans. L'élément de réception présente une forme annulaire, et il délimite deux logements de réception des deux pattes de l'élément d'engagement.

L'inconvénient est que, sauf à prévoir des pattes très rigides (ce qui demanderait un effort important pour assembler les deux éléments), ces pattes risquent de ressortir de leurs logements lorsqu'un effort est appliqué pour faire pivoter les deux éléments l'un par rapport à l'autre, si bien que le blocage de la mobilité en rotation de ces deux éléments l'un par rapport à l'autre n'est pas suffisamment assuré.

On connaît également du document FR2641652 une boîte électrique d'encastrement réalisée en deux parties, à savoir un corps et un anneau. L'anneau est monté libre en rotation dans une gorge ménagée dans le corps. Il porte deux pattes diamétralement opposées, dont les faces extérieures présentent des crans. Lorsqu'un mécanisme d'appareillage est attaché à l'anneau au moyen de griffes, ces dernières repoussent les pattes crantées de l'anneau contre le corps de la boîte, ce qui leur permet de venir en prise avec des crans prévus à l'intérieur du corps de la boîte.

Dans ce document, il est donc nécessaire de manœuvrer des vis pour bloquer la rotation de l'anneau dans le corps de la boîte, ce qui complique l'assemblage de l'appareillage électrique.

Le document DE9106123 décrit un appareillage électrique comportant un mécanisme équipé de deux pattes d'encliquetage, une plaque d'habillage dont le bord intérieur porte quatre languettes, et une boîte électrique présentant des ouvertures de réception des dents des pattes d'encliquetage du mécanisme.

Dans cet appareillage, les languettes de la plaque d'habillage sont conçues pour venir se positionner derrière les pattes d'encliquetage, afin d'empêcher autant que possible ces dernières de bouger et de sortir des ouvertures de la boîte électrique.

Le document EP0989648 décrit un appareillage électrique comportant un mécanisme, un châssis de support en forme de cadre et une plaque d'habillage.

Le socle du mécanisme comporte un couvercle qui délimite deux cavités opposées, permettant d'encliqueter le socle sur des dents prévues sur le châssis de support. La plaque d'habillage comporte pour sa part des ailettes crantées adaptées à s'engager entre les dents du socle du mécanisme et une partie fixe du châssis de support. La fonction de ces ailettes crantées est de permettre de fixer la plaque d'habillage tout en bloquant toute déformation des dents du socle du mécanisme.

Le document EP1860748 décrit une boîte électrique équipée d'un couvercle qui comprend une plaque en forme de cadre et un enjoliveur.

La plaque comporte des dents d'encliquetage adaptés à s'accrocher à des nervures prévues en saillie dans la boîte électrique. L'enjoliveur comporte quant à lui des languettes adaptées à s'engager entre les dents d'encliquetage et une partie fixe de la boîte électrique, de manière à bloquer les dents d'encliquetage en position.

Le document DE10020216 décrit enfin un appareillage électrique comportant un mécanisme équipé de deux paires de dents adaptées à s'engager au travers d'ouvertures prévues en correspondance dans un support. Des languettes amovibles sont prévues pour être engagées entre les deux dents de chaque paire de dents, afin de forcer ces dents à se déployer dans des directions opposées, permettant ainsi de fixer le mécanisme au support.

On connaît aussi du document US2934590 une boîte à rapporter dans une ouverture rectangulaire pratiquée dans une paroi. Cette boîte présente une forme parallélépipédique et comporte, dans deux faces opposées, des fentes. Elle est conçue pour recevoir un appareillage principal équipé de deux clips. Chaque clip est replié en U, avec un branche fixée au socle de l'appareillage et une branche opposée qui porte une languette prévue pour s'engager dans l'une des fentes précitées. Le fond de chaque clip présente une forme de diamant et est prévu pour recevoir l'extrémité d'un bras faisant saillie à l'arrière d'une plaque d'habillage.

### OBJET DE L'INVENTION

Afin de remédier à ces inconvénients précités de l'état de la technique, la présente invention propose de ne faire coopérer les crans qu'au moment de l'assemblage final de l'appareillage électrique, par exemple au moment où la plaque avant est rapportée sur le module.

Plus particulièrement, on propose selon l'invention un ensemble comprenent un appareillage électrique (1) et une boîte électrique (50) tel que défini dans la revendication 1.

Ainsi, tant que la butée n'est pas rapportée sur le module d'appareillage, ce dernier reste libre de pivoter dans la boîte électrique. L'installateur peut alors facilement régler l'orientation du module d'appareillage dans la boîte électrique. Grâce à l'invention, puisque le ou les cran(s) du module d'appareillage ne sont pas encore verrouillés sur la boîte électrique, ce réglage évite tout endommagement du ou des cran(s).

En revanche, dès que l'élément est rapporté sur le module d'appareillage, la patte est automatiquement repoussée par la butée de telle sorte que chaque cran vient s'ancrer à la boîte électrique, ce qui verrouille le pivotement du module d'appareillage dans la boîte électrique.

On peut prévoir plusieurs modes de réalisation. Un premier mode dans lequel la butée forme ledit élément. Un second mode dans lequel la butée est attachée fixement audit élément. Un troisième mode dans lequel la butée vient de formation avec ledit élément.

D'autres caractéristiques avantageuses et non limitatives de l'ensemble sont définies dans les revendications 2 à 21.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective éclatée d'un ensemble selon l'invention, comportant une boîte électrique à engager dans une cloison et un appareillage électrique à fixer à l'intérieur de cette boîte électrique ;
- la figure 2 est une vue schématique en perspective du module d'appareillage de l'appareillage électrique de la figure 1 ;
- la figure 3 est une vue schématique en perspective des moyens de réglage et de blocage angulaire du module d'appareillage de la figure 2 ;
- la figure 4 est une vue de détail de la zone IV de la figure 2 ;
- la figure 5 est une vue schématique de dessus d'une variante de réalisation des moyens de réglage et de blocage angulaire du module d'appareillage de la figure 2 ;
- la figure 6 est une vue schématique en perspective d'une demi-coupe de la boîte électrique de la figure 1 ;
- la figure 7 est une vue de détail de la zone VII de la figure 6 ;
- la figure 8 est une vue schématique en perspective de la plaque d'habillage de l'appareillage électrique de la figure 1 ;
- la figure 9 est une vue de détail de la zone IX de la figure 8 ;
- les figures 10 et 11 sont des vues illustrant l'assemblage de l'appareillage électrique dans la boîte électrique de la figure 1 ; et
- la figure 12 est une vue schématique en perspective éclatée d'un autre mode de réalisation de l'ensemble représenté sur la figure 1.

En préliminaire on notera que les éléments identiques ou similaires des différents modes de réalisation de l'invention représentés sur les différentes figures seront, dans la mesure du possible, référencés par les mêmes signes de référence et ne seront pas décrits à chaque fois.

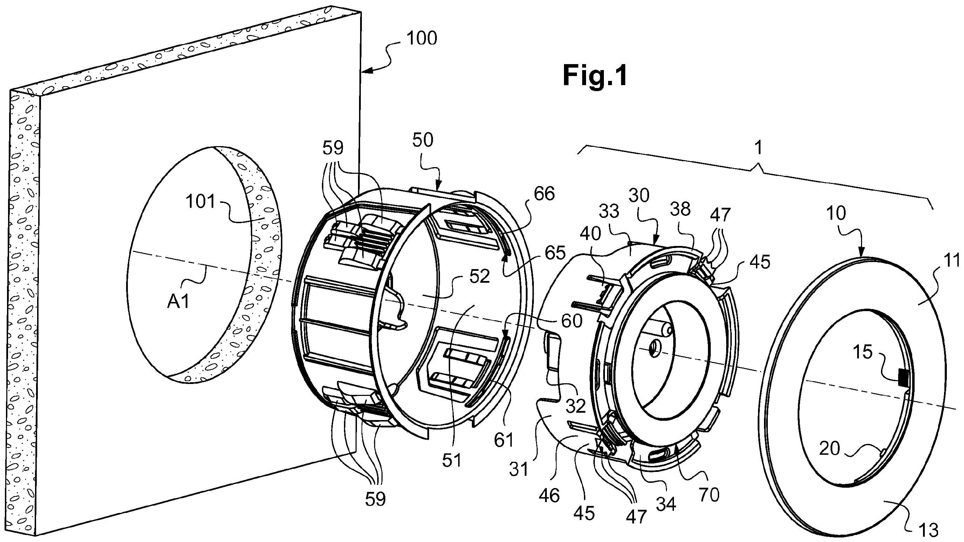

Sur la figure 1, on a représenté un appareillage électrique 1 et une boîte électrique 50 à rapporter sur une paroi.

En l'espèce, cette boîte électrique 50 est du type à encastrer dans une cavité pratiquée dans une paroi. Cette paroi est ici formée par une cloison creuse.

On rappelle à ce sujet que, de manière connue, une telle cloison creuse est généralement composée d'une ossature métallique (formée de montants verticaux et de rails horizontaux non représentés) et de panneaux de plâtre 100 rapportés sur l'une au moins des deux faces de l'ossature métallique.

La cavité pratiquée dans cette cloison creuse pour accueillir la boîte électrique 50 est alors simplement formée par une ouverture circulaire 101 réalisée à la scie cloche dans l'un des panneaux de plâtre 100.

Dans la description, les termes « avant » et « arrière » seront utilisés par rapport à la direction du regard de l'installateur de l'appareillage électrique 1 dans le panneau de plâtre 100. Ainsi, les termes avant et arrière désigneront respectivement le lieu tourné vers l'extérieur de la cloison creuse et le lieu tourné vers l'intérieur de cette cloison creuse.

La boîte électrique 50 comprend ici une paroi latérale 51 fermée à l'arrière par une paroi de fond 52 pour délimiter un logement d'accueil de l'appareillage électrique 1.

Cet appareillage électrique 1 comporte quant à lui un module d'appareillage 30 ainsi qu'au moins une plaque avant prévue pour recouvrir esthétiquement le module d'appareillage 30.

Il comporte plus précisément ici deux plaques avant, dont un enjoliveur 70 et une plaque d'habillage 10.

Le module d'appareillage 30 est conçu pour offrir à l'utilisateur la fonction électrique souhaitée (prise de courant, interrupteur, ...).

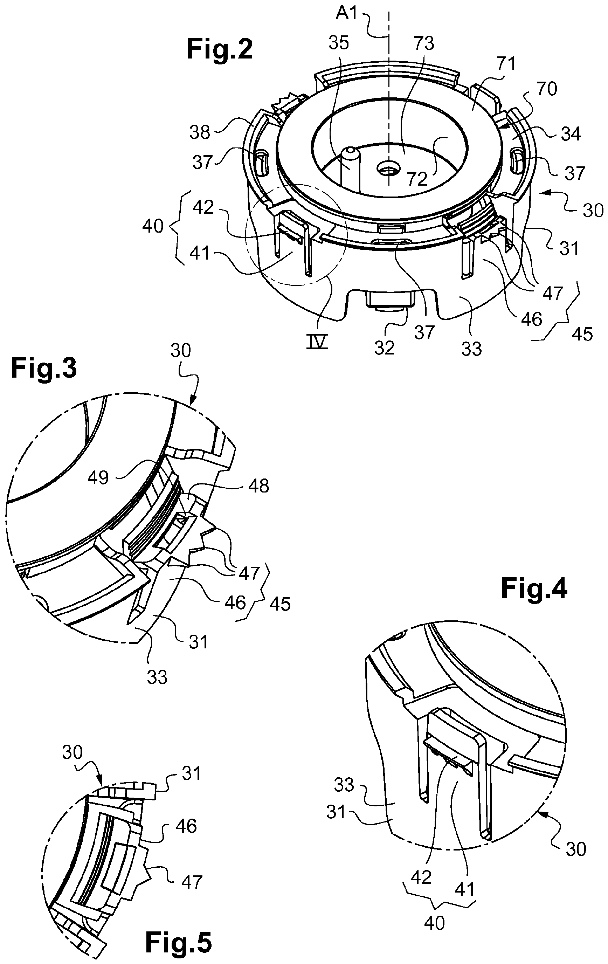

Tel qu'il est représenté sur les figures 1 et 2, ce module d'appareillage 30 se présente sous la forme d'un bloc « tout en un », adapté à être rapporté directement dans la boîte électrique 50 (sans utiliser de support d'appareillage pour faire la jonction entre le module d'appareillage et la boîte électrique).

Ce module d'appareillage 30 comporte à cet effet un socle 31 en matériau isolant, qui délimite un espace intérieur de réception d'un mécanisme électrique 32.

L'enjoliveur 70 est adapté à être rapportée à l'avant du socle 31, au travers d'une ouverture prévue dans le socle 31 pour accéder à une partie fonctionnelle du mécanisme électrique 32.

La plaque d'habillage 10 est pour sa part adaptée à être rapportée à l'avant du socle 31, autour de l'enjoliveur 70.

Le module d'appareillage 30 est par ailleurs équipé de moyens de retenue 40 du socle 31 dans la boîte électrique 50, qui permettent d'éviter que le socle 31 ne puisse être extrait hors de la boîte électrique 50.

Il est également équipé de moyens de réglage et de blocage angulaire 45 du socle 31 par rapport à la boîte électrique 50, qui permettent d'éviter que le socle 31 ne puisse pivoter dans la boîte électrique 50.

La boîte électrique 50 comporte en correspondance des moyens complémentaires de retenue 60 (qui coopèrent avec les moyens de retenue 40 de l'appareillage électrique 1), et des moyens complémentaires de réglage et de blocage angulaire 65 (qui coopèrent avec moyens de réglage et de blocage angulaire 45 de l'appareillage électrique 1).

Selon une caractéristique de l'invention, comme le montre la figure 1, les moyens de réglage et de blocage angulaire 45 prévus sur le socle 31 du module d'appareillage 30 comportent au moins un cran 47 qui est situé sur une patte 46 mobile entre une position rétractée et une position déployée vers l'extérieur du socle 31, et il est prévu une butée 20 ; 122 portée par un élément et qui est adaptée à automatiquement repousser ladite patte 46 vers sa position déployée lorsque cet élément est monté sur le socle 31 du module d'appareillage 30.

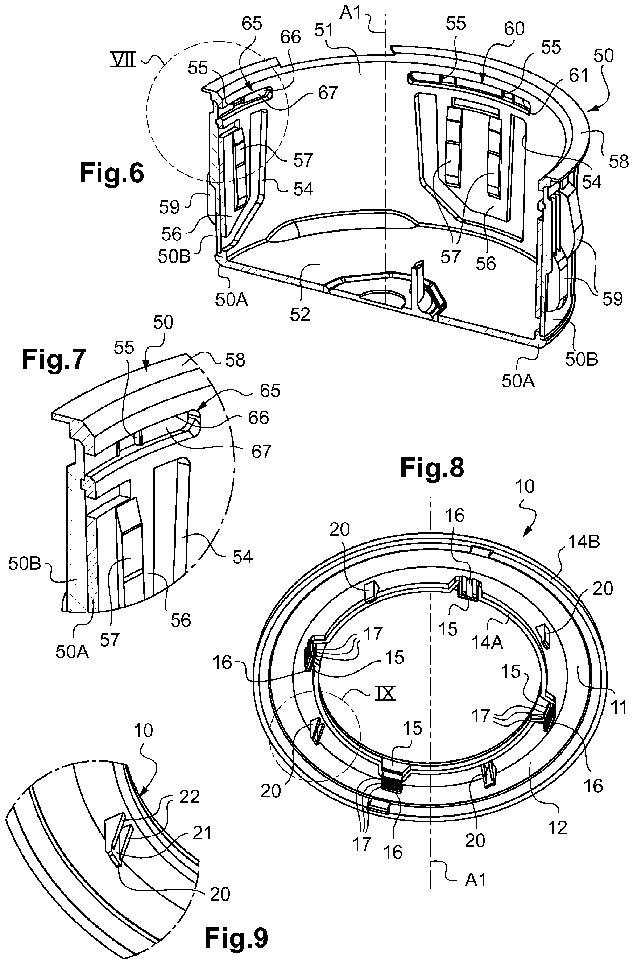

En correspondance, comme le montre la figure 6, les moyens complémentaires de réglage et de blocage angulaire 65 prévus sur la boîte électrique 50 comportent une surface d'accrochage 67 à laquelle le cran 47 est adapté à s'accrocher.

La butée 20 ; 122 est adaptée à forcer chaque cran 47 à venir coopérer avec la surface d'accrochage 67 correspondante de la boîte électrique 50 afin de bloquer la rotation du module d'appareillage dans la boîte électrique 50.

Préférentiellement, lorsque la butée 20 ; 122 n'est pas assemblée au module d'appareillage 30 (et est donc dans une position éloignée de la patte 46), chaque cran 47 du socle 31 du module d'appareillage 30 est situé à distance ou en léger appui contre la surface d'accrochage 67 correspondante de la boîte électrique 50, de sorte que le module d'appareillage 30 est alors libre de pivoter dans la boîte électrique 50. En l'absence de butée 20 ; 122, il est alors possible de régler la position angulaire du module d'appareillage électrique 30 dans la boîte électrique 50.

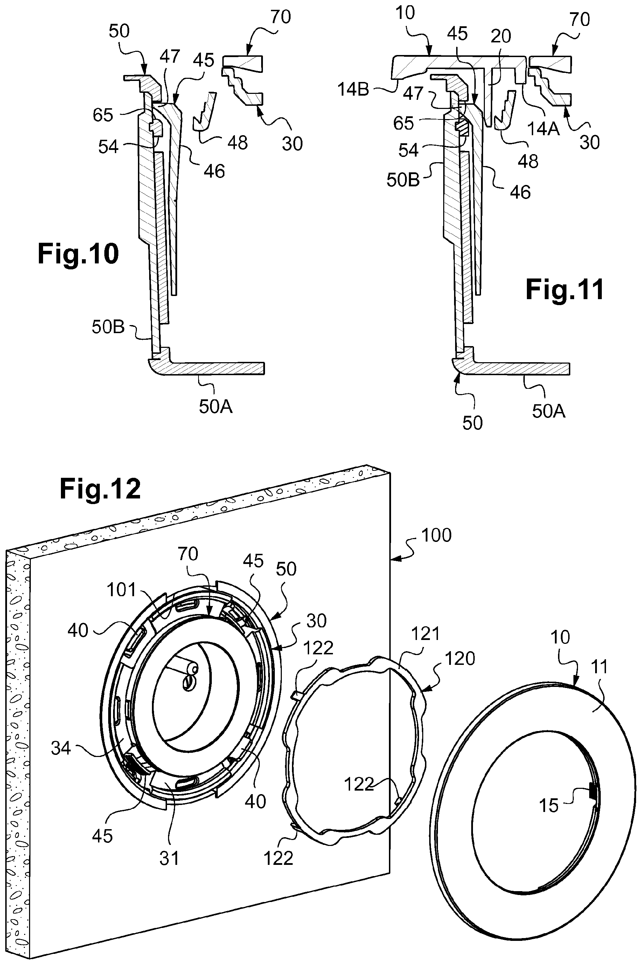

Dans le mode de réalisation de l'invention représenté sur les figures 1 à 11, et de manière préférentielle, la butée 20 est fixée ou elle vient de formation avec la plaque d'habillage 10 (voir figure 8), si bien qu'elle est adaptée à repousser ladite patte 46 vers sa position déployée à la faveur du montage de la plaque d'habillage 10 sur le socle 31 du module d'appareillage 30 (voir figures 10 et 11).

On pourra envisager trois autres modes de réalisation de la butée.

Dans un premier mode de réalisation représenté sur la figure 12, on pourra prévoir que la butée 122 appartienne à une pièce 120 distincte des autres composants de l'appareillage électrique (distincte notamment du socle 31, de l'enjoliveur 70 et de la plaque d'habillage 10), auquel cas la butée 122 sera adaptée à repousser la patte vers sa position déployée à la faveur du montage de la pièce 120 sur l'appareillage électrique.

Dans un second mode de réalisation non représenté sur les figures, on pourra prévoir que la butée soit fixée ou qu'elle vienne de formation avec l'enjoliveur, auquel cas la butée sera adaptée à repousser la patte vers sa position déployée à la faveur du montage de l'enjoliveur sur le socle du module d'appareillage.

Dans un troisième mode de réalisation non représenté sur les figures, on pourra prévoir que la butée forme une pièce indépendante, à rapporter sur le socle du module d'appareillage pour repousser la patte vers sa position déployée.

Ici, comme le montre la figure 1, le socle 31 comprend une paroi latérale 33 cylindrique de révolution autour d'un axe A1, qui est partiellement fermée à l'avant par une paroi frontale 34 plane. Elle est bordée à l'avant par un trottoir périphérique 38 prévu pour s'appuyer contre la boîte électrique 50.

La forme du socle 31 est conçue pour être semblable à celle du volume intérieur délimité par la boîte électrique 50. La forme de ce socle 31 permet ainsi de profiter de l'ensemble du volume intérieur délimité par la boîte électrique 50 pour loger des mécanismes électriques de toutes tailles.

La paroi frontale 34 présente une ouverture centrale (non visible sur les figures) d'accès au mécanisme électrique 32, qui est fermée par l'enjoliveur 70.

Le mécanisme électrique 32 logé à l'intérieur du socle 31 du module d'appareillage 30 comporte classiquement une partie fonctionnelle servant à assurer la fonction pour laquelle le module d'appareillage a été conçu, et une partie de connexion servant à assurer sa connexion électrique au réseau électrique local.

On entend par « partie fonctionnelle » une partie qui est adaptée à accomplir une fonction qui va au-delà d'une simple connexion à des conducteurs électriques (cette connexion étant réalisée par la « partie de connexion »).

La partie fonctionnelle présente une forme adaptée à la fonction que le mécanisme électrique doit exécuter.

Il pourra ainsi s'agir d'une fonction d'interaction avec l'usager (typiquement d'une fonction de prise de courant, d'interrupteur, de va-et-vient, de variateur électrique, de prise VDI ou équivalent, de prise réseau, de prise de téléphone), ou d'une fonction d'interaction avec l'environnement (typiquement d'une fonction de voyant, de thermostat, de détecteur de fumée, de détecteur d'inondation, de détecteur de température, de détecteur de mouvement, de détecteur de lumière...).

Il s'agit ici d'une fonction de prise de courant.

Comme le montre la figure 2, la partie fonctionnelle comporte alors une broche de terre 35, et deux alvéoles (non visibles) qui sont logées à l'intérieur du socle 31 et qui sont adaptées à recevoir deux broches d'une fiche électrique.

La partie de connexion pourra quant à elles comporter des bornes automatiques ou à vis, permettant de fixer et de connecter trois fils électriques issus du réseau électrique local aux broches de terre et alvéoles précitées.

L'enjoliveur 70, qui ferme l'ouverture centrale prévue dans la paroi frontale 34 du socle 31, présente une forme adaptée à la fonction du module d'appareillage 30.

Il comporte ainsi une paroi avant 71 présentant un renfoncement en creux vers l'arrière qui délimite un puits d'insertion de la fiche électrique. Sa paroi avant 71 est ici plane et présente une forme annulaire. Le puits d'insertion est quant à lui plus précisément délimité par une paroi latérale 72 cylindrique de révolution autour de l'axe A1, qui est fermée à l'arrière par un fond 73 dans lequel sont prévus trois ouvertures pour le passage de la broche de terre 35 et le passage des broches de la fiche électrique.

Pour la fixation de l'enjoliveur 70 au socle 31 du module d'appareillage, la paroi latérale 72 de l'enjoliveur 70 porte extérieurement des dents d'encliquetage (non visibles) adaptées à s'accrocher au socle 31.

Les moyens de retenue 40 du socle 31 du module d'appareillage 30 dans la boîte électrique 50 comportent ici deux pattes de flexion 41 qui sont découpées dans la paroi latérale 33 du socle 31 et qui portent chacune sur leurs faces extérieures une dent de retenue 42.

Ces deux pattes de flexion 41 sont situées de manière diamétralement opposée par rapport à l'axe A1, et s'étendent en longueur parallèlement à l'axe A1.

Comme le montre la figure 4, chaque patte de flexion 41 présente une forme de rectangle dont trois des bords sont libres et dont le quatrième bord, à savoir ici le bord arrière, se raccorde à la paroi latérale 33 du socle 31 pour former une sorte de charnière.

Chaque dent de retenue 42 s'étendent en longueur parallèlement au bord avant de la patte de flexion 41 correspondante. Chaque dent de retenue 42 présente une face avant plane et orthogonale à l'axe A1, qui est adaptée à s'accrocher à la boîte électrique 50, et une face arrière inclinée par rapport à l'axe A1, qui forme une rampe permettant à la patte de flexion 41 de se déformer élastiquement vers l'intérieur lorsque le module d'appareillage 30 est rapporté dans la boîte cylindrique 50.

Ici, les pattes de flexion 41 s'élèvent par-delà la paroi frontale 34 du socle 31, de manière que leurs bords avant sont accessibles à l'installateur. Ce dernier peut alors facilement faire fléchir manuellement les pattes de flexion 41 vers l'intérieur du socle 31 pour démonter le module d'appareillage 30 hors de la boîte électrique 50.

Comme le montre la figure 2, les moyens de réglage et de blocage angulaire 45 du socle 31 du module d'appareillage 30 dans la boîte électrique 50 comportent ici deux pattes (appelées pattes de flexion 46) qui sont découpées dans la paroi latérale 33 du socle 31 et qui portent chacune sur leurs faces externes trois crans 47.

Ces deux pattes de flexion 46 sont situées de manière diamétralement opposée par rapport à l'axe A1, à égales distances des premières pattes de flexion 41, et elles s'étendent en longueur parallèlement à l'axe A1.

Comme le montre la figure 3, chaque patte de flexion 46 présente une forme de rectangle dont trois des bords sont libres et dont le quatrième bord, à savoir ici le bord arrière, se raccorde à la paroi latérale 33 du socle 31 pour former une sorte de charnière.

Les crans 47 sont alors situés en saillie de la face extérieure de la patte de flexion 46 correspondante, côte-à-côte le long du bord avant de cette patte de flexion 46. Chaque cran 47 présente une forme saillante vers l'extérieur (ici triangulaire), avec deux bords latéraux droits en dièdre, une face avant plane et orthogonale à l'axe A1 et une face arrière inclinée par rapport à l'axe A1 (qui forme une rampe permettant à la patte de flexion 46 de se déformer élastiquement vers l'intérieur lorsque le module d'appareillage 30 est rapporté dans la boîte cylindrique 50).

En variante, comme le montre la figure 5, on aurait pu prévoir que chaque patte de flexion 46 porte un seul et unique cran 47.

Ici, comme le montre la figure 3, ces pattes de flexion 46 portent chacune à l'avant un retour 48 vers l'intérieur du socle 31, qui présente une ouverture centrale 49 de passage de la butée 20 correspondante.

Ici, le socle 31 du module d'appareillage 30 est moulé d'une seule pièce avec les moyens de retenue 40 et les moyens de réglage et de blocage angulaire 45.

Sur la figure 6, on a représenté une demi-coupe de la boîte électrique 50 représentée sur la figure 1. On y observe que la boîte électrique 50 est constituée d'un corps 50A réalisé dans un matériau plastique rigide (typiquement en polypropylène) et d'un revêtement 50B réalisé dans un matériau plus souple (typiquement en SEBS - dont la formule chimique est «polystyrène-b-poly(éthylène-butylène)-b-polystyrène »).

La paroi latérale 51 du corps 50A de la boîte électrique 50 présente une forme cylindrique de révolution autour de l'axe A1.

Sur les figures 1, 6 et 7, on observe que la boîte électrique 50 présente, pour la retenue et le blocage angulaire du module d'appareillage 30, quatre fenêtres 61, 66 régulièrement réparties autour de l'axe A1.

Deux de ces fenêtres 61, qui sont diamétralement opposées, appartiennent aux moyens complémentaires de retenue 60 précités, en ce sens qu'elles sont adaptées à coopérer avec les moyens de retenue 40 du module d'appareillage 30.

Les deux autres fenêtres 66 appartiennent aux moyens complémentaires de réglage et de blocage angulaire 65 précités, en ce sens qu'elles sont adaptées à coopérer avec les moyens de réglage et de blocage angulaire 45 du module d'appareillage 30.

En pratique, ces quatre fenêtres 61, 66 sont identiques.

Elles présentent chacune une forme rectangulaire et elles s'étendent en longueur le long du bord avant de la paroi latérale 51 de la boîte électrique 50. Elles présentent une hauteur suffisante pour permettre l'engagement des dents de retenue 42 ou des crans 47 du socle 31 du module d'appareillage 30. Elles sont traversantes, en ce sens qu'elles débouchent de part et d'autre du corps 50A de la boîte électrique 50.

Comme le montrent les figures 1 et 6, le revêtement 50B recouvre ici une partie de la face extérieure de la paroi latérale 51 du corps 50A de la boîte électrique 50. Il forme ici un bandeau qui s'étend sur tout le pourtour de la face extérieure de cette paroi latérale 51 et qui ferme les fonds des quatre fenêtres 61, 66.

Ce revêtement 50B est ici interrompu, au niveau de chaque fenêtre 61, 66, par deux languettes 55 qui sont situées à distance l'une de l'autre et qui viennent de formation avec le reste du corps 50A de la boîte électrique 50. Ces deux languettes 55 (en polypropylène) permettent de rigidifier les fenêtres 61, 66. En variante, on pourrait prévoir que le revêtement recouvre ces deux languettes.

Les dents de retenue 42 des moyens de retenue 40 du socle 31 du module d'appareillage 30 sont adaptées à s'accrocher aux bords avant des deux fenêtres 61 lorsque le trottoir périphérique 38 du socle 31 vient s'appuyer contre le bord avant de la paroi latérale 51 de la boîte électrique 50, ce qui permet de bloquer le module d'appareillage 30 selon l'axe A1.

Ici, les crans 47 des moyens de réglage et de blocage angulaire 45 du module d'appareillage 30 sont également adaptés à s'accrocher aux bords avant des deux fenêtres 66 lorsque le trottoir périphérique 38 du socle 31 vient s'appuyer contre le bord avant de la paroi latérale 51 de la boîte électrique 50, ce qui leur permet de participer au blocage axial du module d'appareillage 30 dans la boîte électrique 50.

Les dents de retenue 42 et les crans 47 s'étendent ici sur toute la largeur des pattes de flexion 41, 46 qui les portent. Les largeurs de ces pattes de flexion 41, 46 sont strictement inférieures aux longueurs des fenêtres 61, 66. Par conséquent, une fois les dents de retenue 42 et les crans 47 accrochés aux bords avant des fenêtres 61, 66, le module d'appareillage 30 reste libre de pivoter dans la boîte électrique 50 autour de l'axe A1.

Bien entendu, ce pivotement est borné entre deux positions angulaires extrêmes dans lesquelles les bords des dents de retenue 42 viennent au contact de l'une ou l'autre des extrémités des fenêtres 61 correspondantes.

Pour bloquer cette mobilité de pivotement, les butées 20 précitées sont prévues pour repousser les pattes de flexion 46 en position déployée, de telle manière que les crans 47 viennent coopérer avec une surface d'accrochage 67 prévue dans la boîte électrique 50.

En l'espèce, chaque surface d'accrochage 67 est formée par la partie de la face intérieure du revêtement 50B qui ferme le fond de la fenêtre 66 à laquelle s'accrochent les crans 47.

En effet, lorsque la butée 20 force la patte de flexion 46 correspondante à fléchir en position déployée, les crans 47 portés par cette patte de flexion 46 viennent s'ancrer dans (voire percer) le revêtement 50B, ce qui bloque la mobilité en rotation du module d'appareillage 30 dans la boîte électrique 50 autour de l'axe A1.

L'utilisation du revêtement 50B souple pour coopérer avec les crans 47 présente plusieurs avantages.

Tout d'abord, le revêtement 50B permet à l'installateur de régler puis de bloquer avec précision l'orientation autour de l'axe A1 du module d'appareillage 30 (de manière à placer ce dernier exactement selon la verticale), avec une précision inférieure au degré. En l'espèce, puisque le système de fixation angulaire utilisé ne comporte pas deux séries de crans qui s'engrènent, il n'y a pas de notion de pas. De ce fait, la précision du réglage angulaire est quasi-infinie.

Un autre avantage est que, en l'absence de butée 20, les crans 47 viennent simplement au contact du revêtement 50B, ce qui permet de freiner la mobilité en rotation du module d'appareillage 30 autour de l'axe A1 sans la bloquer, ce qui facilite le travail de l'installateur.

Comme le montre bien la figure 6, pour sa fixation dans l'ouverture circulaire 101 pratiquée dans le panneau de plâtre 100, le corps 50A de la boîte électrique 50 comporte un trottoir extérieur 58 qui longe extérieurement le bord avant de la paroi latérale 51 et qui est adapté à prendre appui contre la face avant du panneau de plâtre 100, tout autour de l'ouverture circulaire 101. Ainsi, ce trottoir extérieur 58 permet de bloquer le corps 50A de la boîte électrique 50 vers l'arrière.

Pour le bloquer vers l'avant, la boîte électrique pourrait être équipée de deux griffes qui interviendraient en position diamétralement opposée et qui, sous le contrôle de vis, seraient aptes à venir s'accrocher à la face arrière du panneau de plâtre.

Ici, comme le montrent les figures 1 et 6, la paroi latérale 53 de la boîte électrique 50 comporte plutôt quatre volets 56 globalement rectangulaires qui sont découpés dans des ouvertures 54 pratiquées dans la paroi latérale 51 et qui sont régulièrement répartis autour de l'axe A1. Chaque volet 56 présente trois bords libres et un quatrième bord, à savoir ici le bord avant, qui se raccorde au reste de la paroi latérale 51 par deux pattes formant charnière.

Les volets 56 sont ainsi libres de pivoter au travers des ouvertures 54, entre une position rentrée et une position sortie.

Au repos, les volets 56 sont en position rentrée, c'est-à-dire que leurs faces externes sont situées dans le prolongement de la face externe du reste de la paroi latérale 51 du corps 50A de la boîte électrique 50. Ces volets ne gênent donc pas l'engagement de la boîte électrique au travers de l'ouverture circulaire 101 pratiquée dans le panneau de plâtre 100.

Ces quatre volets 56 comportent chacun, en saillie sur leurs faces intérieures, deux nervures parallèles 57 qui forment des rampes d'axes parallèles à l'axe A1. Ainsi, lorsque le module d'appareillage 30 est rapporté dans la boîte électrique 50 selon l'axe A1, son socle 31 appuie contre ces nervures parallèles 57, ce qui permet de déployer les volets 56 en position sortie, c'est-à-dire en saillie de la face externe de la paroi latérale 51 du corps 50A de la boîte électrique 50.

Ici, le revêtement 50B en forme de bandeau recouvre notamment les volets 56 de manière à obturer les ouvertures 54. Il présente, au niveau de chacun des volets 56, des nervures 59 parallèles à l'axe A1, en saillie sur sa face externe (mieux visibles sur la figure 1).

De cette manière, lorsqu'ils se déploient, les volets 56 compriment les nervures 59 du revêtement 50B contre le bord de l'ouverture circulaire 101 pratiquée dans le panneau de plâtre 100, ce qui permet de fixer la boîte électrique 50 dans cette ouverture circulaire 101.

La plaque d'habillage 10 est prévue pour être rapportée à l'avant du socle 31 du module d'appareillage 30, autour de l'enjoliveur 70, à des fins esthétiques et de protection électrique.

Comme le montrent les figures 1 et 8, cette plaque d'habillage 10 comporte à cet effet une paroi frontale 11 adaptée à recouvrir la périphérie de la paroi frontale 34 du socle 31 du module d'appareillage 30 et à s'appliquer contre le panneau de plâtre 100, tout autour du module d'appareillage 30.

Dans le mode de réalisation représenté sur les figures 1 à 11, la paroi frontale 11 de la plaque d'habillage 10 présente des faces avant 13 et arrière 12 planes. Elle présente un bord extérieur et un bord intérieur circulaires et concentriques. Son diamètre extérieur est supérieur au diamètre de l'ouverture circulaire 101 pratiquée dans le panneau de plâtre 100.

Cette paroi frontale 11 porte, du côté de sa face arrière 12, une nervure périphérique intérieure 14A qui borde son ouverture et qui est adaptée à coulisser le long de l'enjoliveur 70 lors de sa mise en place sur le socle 31 du module d'appareillage 30 (voir figure 11).

Elle porte également en face arrière 12 une nervure périphérique extérieure 14B qui est adaptée à s'appliquer contre la face avant du panneau de plâtre 100.

Comme le montre la figure 8, pour sa fixation à l'avant du module d'appareillage 30, la plaque d'habillage 10 comporte au moins deux pattes de fixation 15 qui s'étendent à partir de la face arrière 12 de sa paroi frontale 11, orthogonalement à celle-ci.

Elle comporte ici quatre pattes de fixation 15 qui sont régulièrement réparties autour de l'axe A1.

Chaque patte de fixation 15 comporte une languette flexible 16 en forme de plaquette carrée, dont les deux faces principales sont orientées orthoradialement.

La face principale intérieure de chaque languette flexible 16 porte des crans 17 qui sont étagés à différentes hauteurs par rapport à la face arrière 12 de la paroi frontale 11.

En correspondance, comme le montre la figure 2, la paroi frontale 34 du socle 31 du module d'appareillage 30 présente quatre fentes 37 régulièrement réparties autour de l'axe A1, au travers desquelles les pattes de fixation 15 peuvent s'engager.

Ces fentes 37 sont prévues de telle manière que les crans 17 des pattes de fixation 15 peuvent s'y accrocher de manière à fixer rigidement la plaque d'habillage 10 au module d'appareillage 30.

La pluralité de crans 14 prévus sur chaque languette flexible 16 permet d'accrocher la plaque d'habillage 10 à différentes hauteurs par rapport au module d'appareillage 30. Ainsi, la plaque d'habillage peut s'accrocher au socle 31 du module d'appareillage 30 quelle que soit l'épaisseur du revêtement mural appliqué sur le panneau de plâtre 100 (et donc quelle que soit la profondeur du module d'appareillage 30 par rapport à la face avant de ce revêtement mural).

Comme le montrent les figures 8 et 9, les butées 20 qui permettent de repousser les pattes de flexion 46 du socle 31 du module d'appareillage 30 en position déployée sont portées par la face arrière 12 de la paroi frontale 11 de la plaque d'habillage 10.

Elles pourraient être formées par les languettes flexibles (16). Elles sont toutefois ici distinctes de ces languettes flexibles 16.

Ces butées sont ici formées par des ergots 20, au nombre de quatre, qui s'étendent chacun en saillie de la face arrière 12 de la paroi frontale 11, entre deux languettes flexibles 16.

Deux de ces ergots 20 sont alors prévus pour repousser en position déployée les pattes de flexion 46, tandis que les deux autres ergots 20 sont prévus pour se placer au dos des pattes de flexion 41. Ces deux autres ergots 20 ont alors pour fonction d'empêcher les pattes de flexion 41 de fléchir vers l'intérieur du socle 31, ce qui évitent que les dents de retenue 42 ne se décrochent des fenêtres 61 correspondantes de la boîte électrique 50.

Comme le montre plus particulièrement la figure 9, chaque ergot 20 comporte une paroi principale 21 rectangulaire, qui s'étend orthoradialement par rapport à l'axe A1. Chaque ergot 20 comporte par ailleurs deux nervures de rigidification 22 triangulaires, qui s'étendent le long des bords de la paroi principale 21, entre la face intérieure de cette paroi principale 21 et la face arrière 12 de la paroi frontale 11 de la plaque d'habillage 10.

Les parois principales 21 des ergots 20 sont alors prévues pour appuyer par leurs faces extérieures contre les pattes de flexion 41, 46 du socle 31 du module d'appareillage 30, et notamment contre celles des moyens de réglage et de blocage angulaire 45, de manière à forcer les crans 47 à s'ancrer dans le revêtement 50B de la boîte électrique 50.

L'installation de l'appareillage électrique 1 dans l'ouverture circulaire 101 pratiquée dans le panneau de plâtre 100 est alors réalisée de la manière suivante.

L'installateur rapporte tout d'abord la boîte électrique 50 dans l'ouverture circulaire 101, en prenant soin que son trottoir périphérique 58 s'applique bien contre le panneau de plâtre 100.

L'installateur rapporte ensuite le module d'appareillage 30 dans la boîte électrique 50, en prenant soin que son trottoir périphérique 38 s'applique bien contre le trottoir périphérique 58 de la boîte électrique 50.

Dans cette position, les crans 47 et les dents de retenue 42 du socle 31 du module d'appareillage 30 s'accrochent aux fenêtres 61, 66 de la boîte électrique 50, ce qui permet de bloquer axialement le module d'appareillage 30 dans la boîte électrique 50.

Dans cette position également, les volets 56 de la boîte électrique 50 sont repoussés vers l'extérieur, de manière que la boîte électrique 50 est alors rigidement fixée au panneau de plâtre 100.

En l'absence de la plaque d'habillage 10, les crans 47 du socle 31 du module d'appareillage 30 sont en léger appui contre le revêtement 50B de la boîte électrique 50 et ils restent libres de glisser dans les fenêtres 66, si bien que l'installateur peut encore régler la position angulaire du module d'appareillage 30 dans la boîte électrique 50 autour de l'axe A1 pour notamment orienter le module d'appareillage 30 à l'aplomb de la verticale de la cloison creuse.

Une fois la position angulaire du module d'appareillage 30 réglée, l'installateur rapporte la plaque d'habillage 10 à l'avant du socle 31, de telle manière que ses pattes de fixation 15 s'accrochent aux fentes 37 prévues dans la paroi frontale 34 du socle 31et que ses butées 20 repoussent les pattes de flexion 46 en position déployée (voir figures 10 et 11).

Alors, les crans 47 s'ancrent dans le revêtement 50B de la boîte électrique 50, ce qui permet de bloquer le module d'appareillage 30 dans la boîte électrique 50.

Dans le mode de réalisation représenté sur la figure 12, le module d'appareillage 30, l'enjoliveur 70 et la boîte électrique 50 présentent des formes identiques à celles du module d'appareillage 30, de l'enjoliveur 70 et de la boîte électrique 50 représentés sur la figure 1.

La plaque d'habillage 10 présente une forme homologue de celle de la plaque d'habillage 10 représentée sur la figure 1, à la différence près qu'elle est dépourvue d'ergot (20 sur la figure 1).

Comme cela a été précisé supra, pour remplacer ces ergots, il est alors prévu une pièce 120 qui est adaptée à s'interposer entre le module d'appareillage 30 et la plaque d'habillage 10.

Cette pièce 120 comporte ici un anneau 121 qui est prévu pour se placer autour de l'enjoliveur 70 afin de s'appliquer contre la paroi frontale 34 du module d'appareillage 30. Elle comporte également quatre ergots 122 qui s'étendent à partir de la face arrière de l'anneau 121, vers l'arrière, et qui sont régulièrement répartis autour de l'axe central de l'anneau 121.

Ces quatre ergots 122 présentent des formes identiques à celles des ergots 20 de la plaque d'habillage 10 représentée sur la figure 1. Ils ont alors une fonction de butée en ce sens qu'ils sont prévus pour repousser les pattes de flexion 46 du module d'appareillage 30 en position déployée, de telle manière que les crans 47 viennent coopérer avec la surface d'accrochage 67 prévue dans la boîte électrique 50.

En particulier, on pourrait envisager que la surface d'accrochage (qui est prévue dans la boîte électrique pour que s'y accrochent les crans du module d'appareillage) soit formée, non pas par le revêtement souple, mais plutôt par des crans rigides prévus au fond des fenêtres de la boîte électrique. Dans cette variante, la boîte électrique pourra alors éventuellement être dépourvue de revêtement souple. Les crans du module d'appareillage sont alors conçus pour engrener ceux prévus aux fonds des fenêtres de la boîte électrique uniquement lorsque les butées viennent faire fléchir les pattes de flexion.

Dans cette variante encore, on pourra envisager que la boîte électrique ne comporte qu'une seule et unique fenêtre, qui s'étend sur l'ensemble du pourtour de sa paroi latérale. Alors, avant le montage de la plaque d'habillage, l'installateur pourra faire pivoter le module d'appareillage dans la boîte électrique selon une révolution complète.

Selon une autre variante de l'invention, on pourra prévoir que les crans soient portés non pas par des pattes flexibles, mais plutôt par des pattes montées mobiles en pivotement sur le socle du module d'appareillage.

Selon une autre variante, on pourrait prévoir que les moyens de retenue et les moyens de réglage et de blocage angulaire soient confondus. Ainsi pourraitt-on par exemple prévoir que le module d'appareillage comporte quatre pattes de flexion équipées chacune de crans du type de ceux représentés sur la figure 3.

Encore en variante, on pourrait prévoir que les moyens de retenue et les moyens de réglage et de blocage angulaire soient distincts, auquel cas les crans du module d'appareillage ne seront pas conçus pour s'accrocher aux bords avant des fenêtres pratiquées dans la paroi latérale de la boîte électrique.

## Revendications

1. Ensemble comportant un appareillage électrique (1) et une boîte électrique (50):
où ledit appareillage électrique (1) comporte un module d'appareillage (30) à engager dans la boîte électrique (50), ledit module d'appareillage (30) comprenant :
- un socle (31) en matériau isolant qui délimite un espace intérieur de réception d'un mécanisme électrique (32),
- des moyens de retenue (40) du socle (31) dans la boîte électrique (50), et
où ladite boîte électrique (50) comprend :
- une paroi latérale (51) qui est fermée à l'arrière par une paroi de fond (52) pour délimiter un logement d'accueil dudit appareillage électrique (1)
- des moyens complémentaires de retenue (60) qui coopèrent avec les moyens de retenue (40) dudit appareillage électrique (1), et
**caractérisé en ce que** ledit module d'appareillage (30) comprend des moyens de réglage et de blocage angulaire (45) du socle (31) par rapport à la boîte électrique (50), qui comportent au moins un cran (47) qui est situé sur une patte (46) du socle (31) mobile pour prendre une position déployée vers l'extérieur du socle (31), et qui permettent de bloquer le socle (31) dans la boîte électrique (50) entre deux positions angulaires extrêmes, et ladite boîte électrique (50) comporte au moins une fenêtre (66) et des moyens complémentaires de réglage et de blocage angulaire (65) qui comportent une surface d'accrochage (67) à laquelle le cran (47) des moyens de réglage et de blocage angulaire (45) dudit appareillage électrique (1) est adapté à s'accrocher, ledit cran (47) présentant une longueur strictement supérieure à la largeur globale du ou des crans (47) situés sur la patte (46), l'appareillage électrique (1) comporte un élément (10; 120) distinct du module d'appareillage (30), comportant une butée (20;122) qui est adaptée à automatiquement repousser ladite patte (46) vers sa position déployée à la faveur du montage de cet élément (10;120) sur le socle (31) du module d'appareillage (30).

2. Ensemble selon la revendication 1, dans lequel il est prévu au moins une plaque avant (10, 70) à rapporter sur le module d'appareillage (30) et dans lequel ledit élément est une pièce (120) distincte dudit socle (31) et de chaque plaque avant (10, 70).

3. Ensemble selon la revendication 1, dans lequel ledit élément (10) forme une plaque avant (10) à rapporter sur le module d'appareillage (30).

4. Ensemble selon l'une des revendications 2 et 3, dans lequel ladite plaque avant forme un enjoliveur et est adaptée à être rapportée à l'avant du socle, par-dessus une ouverture d'accès à une partie fonctionnelle du mécanisme électrique.

5. Ensemble selon l'une des revendications 2 et 3, dans lequel ladite plaque avant forme une plaque d'habillage (10) et est adaptée à être rapportée à l'avant du socle (31), autour d'une ouverture d'accès à une partie fonctionnelle du mécanisme électrique (32).

6. Ensemble selon l'une des revendications 2 à 5, dans lequel ladite plaque avant (10) comporte des moyens d'emboîtement ou d'encliquetage (15) sur le module d'appareillage (30).

7. Ensemble selon la revendication 6, dans lequel lesdits moyens d'encliquetage comportent au moins deux languettes flexibles (16) équipées de dents d'encliquetage (17) adaptées à s'accrocher au socle (31) du module d'appareillage (30).

8. Ensemble selon la revendication 7, dans lequel ladite butée (20) est distincte desdites languettes flexibles (16).

9. Ensemble selon la revendication 7, dans lequel ladite butée est formée par l'une desdites languettes flexibles.

10. Ensemble selon l'une des revendications précédentes, dans lequel les moyens de réglage et de blocage angulaire (45) comportent au moins deux pattes (46) distinctes chacune équipée d'au moins un cran (47).

11. Ensemble selon l'une des revendications précédentes, dans lequel chaque patte (46) est moulée d'une seule pièce avec le socle (31) et est flexible vers l'extérieur du socle (31).

12. Ensemble selon l'une des revendications précédentes, dans lequel chaque patte (46) porte une pluralité de crans (47).

13. Ensemble selon l'une des revendications 1 à 12, dans lequel les moyens de retenue (40) comportent au moins une seconde patte (41) qui est distincte de chaque patte (46) et qui est équipée d'une dent de retenue (42).

14. Ensemble selon l'une des revendications 1 à 12, dans lequel les moyens de retenue comportent au moins une dent de retenue qui est située sur la patte des moyens de réglage et de blocage angulaire.

15. Ensemble selon l'une des revendications 1 à 14, dans lequel la butée (20) dudit appareillage électrique (1) étant dans une position éloignée de ladite patte (46), chaque cran (47) situé sur la patte (46) du socle (31) du module d'appareillage (30) est situé à distance ou en léger appui contre la surface d'accrochage (67) de la boîte électrique (50), pour permettre la rotation dudit module d'appareillage (30) dans la boîte électrique (50).

16. Ensemble selon l'une des revendications précédentes, dans laquelle la paroi latérale (51) présente au moins une fenêtre (66) dont le fond est fermé par ladite surface d'accrochage (67).

17. Ensemble selon la revendication précédente, dans laquelle ladite fenêtre (66) présente une longueur strictement supérieure à la largeur globale du ou des crans (47) situés sur la patte (46) du socle (31) du module d'appareillage (30).

18. Ensemble selon l'une des revendications précédentes, dans laquelle ladite surface d'accrochage comporte au moins un cran adapté à coopérer avec chaque cran des moyens de réglage et de blocage angulaire dudit appareillage électrique.

19. Ensemble selon l'une des revendications précédentes, comportant un corps (50A) réalisé en matière rigide, dans laquelle ladite surface d'accrochage (67) comporte une pellicule (50B) en matière souple dans laquelle est adapté à s'enfoncer chaque cran (47) des moyens de réglage et de blocage angulaire (45) dudit appareillage électrique (1).

20. Ensemble selon les revendications précédentes, dans laquelle ladite fenêtre (66) traverse le corps (50A) et dans laquelle ladite pellicule (50B) ferme le fond de ladite fenêtre (66).

21. Ensemble selon l'une des revendications précédentes, dans laquelle lesdits moyens complémentaires de retenue (60) comportent au moins une autre fenêtre (61) pratiquée dans la paroi latérale (51), dont le bord permet l'accrochage des moyens de retenue (40) dudit module d'appareillage (30).

## Patentansprüche

1. Gesamtheit mit einer elektrischen Vorrichtung (1) und einer Elektrodose (50), wobei die elektrische Vorrichtung (1) ein in die Elektrodose (50) einzusetzendes Vorrichtungsmodul (30) aufweist,
wobei das Vorrichtungsmodul (30)
- einen Sockel (31) aus isolierendem Material, der einen Innenraum zum Aufnehmen eines elektrischen Mechanismus (32),
- Mittel (40) zum Festhalten des Sockels (31) in der Elektrodose (50) aufweist,
wobei die Elektrodose (50)
- eine Seitenwand (51), die hinten durch eine Bodenwand (52) begrenzt ist, um einen Aufnahmeraum für die elektrische Vorrichtung (1) abzugrenzen,
- zusätzliche Festhaltemittel (60), die mit den Festhaltemitteln (40) der elektrischen Vorrichtung (1) zusammenwirken,
aufweist,
**dadurch gekennzeichnet, daß** das Vorrichtungsmodul (30) Mittel (45) zum winkelmäßigen Einstellen und Blockieren des Sockels (31) in Bezug auf die Elektrodose (50) aufweist, die mindestens eine Raste (47) aufweisen, die auf einem beweglichen Schenkel (46) des Sockels (31) angeordnet ist, um eine ausgefahrene Stellung nach außerhalb des Sockels (31) einzunehmen, und die ermöglichen, den Sockel (31) in der Elektrodose (50) zwischen zwei extremen Winkelpositionen zu blockieren, und daß die Elektrodose (50) mindestens ein Fenster (66) und zusätzliche Mittel (65) zum winkelmäßigen Einstellen und Blockieren aufweist, die eine Einhakfläche (67) aufweisen, wobei die Raste (47) der Mittel (45) zum winkelmäßigen Einstellen und Blockieren der elektrischen Vorrichtung (1) dazu ausgelegt ist, in diese einzuhaken, wobei die Raste (47) eine absolut größere Länge als die Gesamtbreite der auf dem Schenkel (46) angeordneten Raste oder Rasten (47) aufweist, wobei die elektrische Vorrichtung (1) ein vom Vorrichtungsmodul verschiedenes Element (10; 120) aufweist, das einen Anschlag (20; 122) aufweist, der dazu ausgelegt ist, den Schenkel (46) zugunsten der Montage dieses Elements (10; 120) auf dem Sockel (31) des Vorrichtungsmoduls (30) automatisch in seine ausgefahrene Stellung zurückzudrücken.

2. Gesamtheit gemäß Anspruch 1, bei der mindestens eine auf das Vorrichtungsmodul (30) aufzubringende vordere Platte (10, 70) vorgesehen ist und bei der das Element ein vom Sockel (31) und von jeder vorderen Platte (10, 70) verschiedenes Teil (120) ist.

3. Gesamtheit gemäß Anspruch 1, bei der das Element (10) eine vordere, auf das Vorrichtungsmodul (30) aufzusetzende Platte (10) bildet.

4. Gesamtheit gemäß einem der Ansprüche 2 und 3, bei der die vordere Platte eine Zierkappe bildet und dazu ausgelegt ist, auf die Vorderseite des Sockels, auf eine Öffnung für den Zugang zu einem funktionellen Teil des elektrischen Mechanismus, aufgesetzt zu werden.

5. Gesamtheit gemäß einem der Ansprüche 2 und 3, bei der die vordere Platte eine Verkleidungsplatte (10) bildet und dazu ausgelegt ist, auf die Vorderseite des Sockels (31), um eine Öffnung für den Zugang zu einem funktionellen Teil des elektrischen Mechanismus (32) herum aufgesetzt zu werden.

6. Gesamtheit gemäß einem der Ansprüche 2 bis 5, bei der die vordere Platte (10) Mittel (15) zum Ineinanderfügen oder Einrasten auf dem Vorrichtungsmodul (30) aufweist.

7. Gesamtheit gemäß Anspruch 6, bei der die Einrastmittel mindestens zwei biegsame Zungen (16) aufweisen, die mit Einrastzähnen (17) versehen sind, die dazu ausgelegt sind, sich am Sockel (31) des Vorrichtungsmoduls (30) festzuklammern.

8. Gesamtheit gemäß Anspruch 7, bei der der Anschlag (20) von den biegsamen Zungen (16) getrennt ist.

9. Gesamtheit gemäß Anspruch 7, bei der der Anschlag von einer der biegsamen Zungen gebildet ist.

10. Gesamtheit gemäß einem der vorangehenden Ansprüche, bei der Mittel (45) zum winkelmäßigen Einstellen und Blockieren mindestens zwei getrennte Schenkel (46) aufweist, von denen mindestens einer mit einer Raste (47) ausgestattet ist.

11. Gesamtheit gemäß einem der vorangehenden Ansprüche, bei der jeder Schenkel (46) einstückig mit dem Sockel geformt ist und zum Äußeren des Sockels (31) hin biegsam ist.

12. Gesamtheit gemäß einem der vorangehenden Ansprüche, bei der jeder Schenkel (46) mit mehreren Rasten (47) versehen ist.

13. Gesamtheit gemäß einem der Ansprüche 1 bis 12, bei der die Festhaltemittel (40) mindestens einen zweiten Schenkel (41) aufweisen, der von jedem Schenkel (46) getrennt ist und der mit einem Festhaltezahn (42) ausgestattet ist.

14. Gesamtheit gemäß einem der Ansprüche 1 bis 12, bei der die Festhaltemittel mindestens einen Festhaltezahn aufweisen, der auf dem Schenkel der Mittel zum winkelmäßigen Einstellen und Blockieren angeordnet ist.

15. Gesamtheit gemäß einem der Ansprüche 1 bis 14, bei der sich der Anschlag (20) der elektrischen Vorrichtung (1) in einer von dem Schenkel (46) entfernten Position befindet, wobei sich jede auf dem Schenkel (46) des Sockels (31) des Vorrichtungsmoduls (30) befindliche Raste (47) in einem Abstand von der Einhakfläche (67) der elektrischen Dose (50) befindet oder sich auf dieser leicht abstützt, um ein Drehen des Vorrichtungsmoduls (30) in der Elektrodose (50) zu ermöglichen.

16. Gesamtheit gemäß einem der vorangehenden Ansprüche, bei der die Seitenwand (51) mindestens ein Fenster (66) aufweist, dessen Grund durch die Einhakfläche (67) verschlossen ist.

17. Gesamtheit gemäß dem vorangehenden Anspruch, bei der das Fenster (66) eine absolut größere Länge als die Gesamtbreite der auf dem Schenkel (46) des Sockels (31) des Vorrichtungsmoduls (30) angeordneten Raste oder Rasten (47) aufweist.

18. Gesamtheit gemäß einem der vorangehenden Ansprüche, bei der die Einhakfläche mindestens eine Raste aufweist, die dazu ausgelegt ist, mit jeder Raste der Mittel zum winkelmäßigen Einstellen und Blockieren der elektrischen Vorrichtung zusammenzuwirken.

19. Gesamtheit gemäß einem der vorangehenden Ansprüche mit einem aus einem steifen Material gefertigten Körper (50A), wobei die Einhakfläche (67) eine Haut (50B) aus weichem Material aufweist und wobei jede Raste (47) der Mittel (45) zum winkelmäßigen Einstellen und Blockieren der elektrischen Vorrichtung (1) dazu ausgelegt ist, in diese einzudringen.

20. Gesamtheit gemäß den vorangehenden Ansprüchen, bei der das Fenster (66) den Körper (50A) durchdringt und bei der die Haut (50B) den Grund des Fensters (66) verschließt.

21. Gesamtheit gemäß einem der vorangehenden Ansprüche, bei der die zusätzlichen Festhaltemittel (60) mindestens ein weiteres Fenster (61) aufweisen, das in der Seitenwand (51) ausgebildet ist und dessen Rand das Einhaken der Festhaltemittel (40) des Vorrichtungsmoduls (30) ermöglichen.

## Claims

1. An assembly comprising electrical equipment (1) and an electrical box (50):
in which said electrical equipment (1) comprises an equipment module (30) to be engaged in the electrical box (50), said equipment module (30) comprising:
a base (31) produced from an insulating material which delimits an interior space for receiving an electrical mechanism (32),
means (40) for retaining the base (31) in the electrical box (50), and
in which said electrical box (50) comprises:
a side wall (51) which is closed at the rear by a bottom wall (52) in order to delimit a housing for receiving said electrical equipment (1),
complementary retaining means (60) which cooperate with the retaining means (40) of said electrical equipment (1), and
**characterized in that** said equipment module (30) comprises means (45) for adjustment and for angular locking of the base (31) with respect to the electrical box (50), which comprise at least one notch (47) which is located on a tab (46) of the base (31) and which is movable in order to take up a deployed position towards the outside of the base (31), and which make it possible to lock the base (31) in the electrical box (50) between two extreme angular positions, and said electrical box (50) comprises at least one window (66) and complementary adjustment and angular locking means (65) which comprise a catching surface (67) to which the notch (47) of the adjustment and angular locking means (45) of said electrical equipment (1) is adapted to be caught, said notch (47) having a length which is strictly greater than the overall width of the notch or notches (47) located on the tab (46); the electrical equipment (1) comprises an element (10; 120) which is distinct from the equipment module (30), comprising an abutment (20; 122) which is adapted to automatically push said tab (46) back towards its deployed position to assist with mounting of this element (10; 120) on the base (31) of the equipment module (30).

2. The assembly as claimed in claim 1, in which at least one front plate (10, 70) is provided for attachment to the equipment module (30) and in which said element is a part (120) which is distinct from said base (31) and from each front plate (10, 70).

3. The assembly as claimed in claim 1, in which said element (10) forms a front plate (10) for attachment to the equipment module (30).

4. The assembly as claimed in one of claims 2 and 3, in which said front plate forms a trim and is adapted to be attached to the front of the base, above an opening providing access to a functional portion of the electrical mechanism.

5. The assembly as claimed in one of claims 2 and 3, in which said front plate forms a cover plate (10) and is adapted to be attached to the front of the base (31), around an opening providing access to a functional portion of the electrical mechanism (32).

6. The assembly as claimed in one of claims 2 to 5, in which said front plate (10) comprises means (15) for fitting or snap fastening to the equipment module (30).

7. The assembly as claimed in claim 6, in which said snap fastening means comprise at least two flexible tabs (16) equipped with snap fastening teeth (17) which are suitable for catching onto the base (31) of the equipment module (30).

8. The assembly as claimed in claim 7, in which said abutment (20) is distinct from said flexible tabs (16).

9. The assembly as claimed in claim 7, in which said abutment is formed by one of said flexible tabs.

10. The assembly as claimed in one of the preceding claims, in which the adjustment and angular locking means (45) comprise at least two distinct tabs (46) each equipped with at least one notch (47).

11. The assembly as claimed in one of the preceding claims, in which each tab (46) is moulded in one piece with the base (31) and is capable of flexing towards the outside of the base (31).

12. The assembly as claimed in one of the preceding claims, in which each tab (46) carries a plurality of notches (47).

13. The assembly as claimed in one of claims 1 to 12, in which the retaining means (40) comprise at least one second tab (41) which is distinct from each tab (46) and which is equipped with a retaining tooth (42).

14. The assembly as claimed in one of claims 1 to 12, in which the retaining means comprise at least one retaining tooth which is located on the tab of the adjustment and angular locking means.

15. The assembly as claimed in one of claims 1 to 14 in which, when the abutment (20) of said electrical equipment (1) is in a position which is remote from said tab (46), each notch (47) located on the tab (46) of the base (31) of the equipment module (30) is located at a distance from or bearing slightly against the attachment surface (67) of the electrical box (50), in order to allow the rotation of said equipment module (30) in the electrical box (50).

16. The assembly as claimed in one of the preceding claims, in which the side wall (51) has at least one window (66) the bottom of which is closed by said catching surface (67).

17. The assembly as claimed in the preceding claim, in which said window (66) has a length which is strictly greater than the overall width of the notch or notches (47) located on the tab (46) of the base (31) of the equipment module (30).

18. The assembly as claimed in one of the preceding claims, in which said catching surface comprises at least one notch which is adapted to cooperate with each notch of the adjustment and angular locking means of said electrical equipment.

19. The assembly as claimed in one of the preceding claims, comprising a body (50A) produced from rigid material, into which said catching surface (67) comprises a film (50B) produced from flexible material into which each notch (47) of the adjustment and angular locking means (45) of said electrical equipment (1) is adapted to push.

20. The assembly as claimed in the preceding claims, in which said window (66) passes through the body (50A) and in which said film (50B) closes the bottom of said window (66) .

21. The assembly as claimed in one of the preceding claims, in which said complementary retaining means (60) comprise at least one other window (61) formed in the side wall (51), the edge of which enables the retaining means (40) of said equipment module (30) to be caught.
